Europäisches Patentamt

European Patent Office

Office européen des brevets

(11) Veröffentlichungsnummer: **0 036 600**
**B1**

(12) **EUROPÄISCHE PATENTSCHRIFT**

(45) Veröffentlichungstag der Patentschrift:
19.10.83

(21) Anmeldenummer: 81101932.2

(22) Anmeldetag: 16.03.81

(51) Int. Cl.³: **B 01 J 19/04, B 01 F 3/04,
B 01 D 53/14, C 02 F 3/22**

(54) Verfahren und Vorrichtung zur Begasung von Flüssigkeiten.

(30) Priorität: 26.03.80 DE 3011613

(43) Veröffentlichungstag der Anmeldung:
30.09.81 Patentblatt 81/39

(45) Bekanntmachung des Hinweises auf die Patenterteilung:
19.10.83 Patentblatt 83/42

(84) Benannte Vertragsstaaten:
AT BE CH DE FR GB IT LI NL

(56) Entgegenhaltungen:
EP-A-0 001 834
DE-A-2 443 568
DE-C-211 065
FR-A-915 638
FR-A-2 257 327
FR-A-2 321 930

(73) Patentinhaber: HOECHST AKTIENGESELLSCHAFT,
Postfach 80 03 20, D-6230 Frankfurt am Main 80 (DE)

(72) Erfinder: Herbrechtsmeier, Peter, Dr., Berliner
Strasse 10, D-6238 Hofheim am Taunus (DE)
Erfinder: Schäfer, Hans, Am Rehsteig 15, D-6232 Bad
Soden am Taunus (DE)
Erfinder: Steiner, Rudolf, Prof. Dr., Unterm Waldweg 17,
D-6231 Sulzbach (DE)

BUNDESDRUCKEREI BERLIN

## Verfahren und Vorrichtung zur Begasung von Flüssigkeiten

Zur Durchführung von Gas/Flüssig-Reaktionen sind Verfahren bekannt, bei denen das Gas in einem Säulenreaktor in eine vertikal abströmende Flüssigkeit gegeben, blasenförmig im Gleichstrom mit der Flüssigkeit von oben nach unten geführt wird und die permanente Gasphase am unteren Ende des Säulenreaktors in einem aus einer Erweiterung bestehenden Gasseparator abgeschieden wird (vgl. z. B. Chem.-Ing. Techn. 50 [1978], S. 944 ff. und EP-A-0 001 834). Bei rein physikalischer Absorption ohne nachgeschaltete chemische Reaktion kann bei diesem einstufigen Gleichstromverfahren jedoch maximal nur ein Absorptionsgrad erzielt werden, der einer einzigen theoretischen Absorptionsstufe entspricht. Dies ist für viele Zwecke jedoch nicht ausreichend.

Aus der FR-PS 915 638 ist weiterhin ein Verfahren zur mehrstufigen fraktionierten Destillation von Flüssigkeiten bekannt, bei dem eine aus mehreren übereinander angeordneten Abstromteilen bestehende Fraktionierkolonne benutzt wird, wobei die Dampfzufuhr am oberen Ende jedes Abstromteils und die Frischdampfzufuhr nur am oberen Ende des untersten Abstromteils erfolgt, eine Dampfentnahme am unteren Ende jedes Abstromteils durchgeführt wird, Dampf nach außen abgeführt und zur Ermöglichung eines Gegenstroms in den jeweils nächsthöheren Abstromteil wieder eingebracht wird. Die Trennung von gasförmiger und flüssiger Phase erfolgt hier durch Kondensation; die bei Einsatz einer nichtkondensierbaren Permanentgasphase in Gasblasenform auftretenden Probleme der Gasblasenabscheidung und der den Absorptionsgrad beeinträchtigenden Gasblasenrückvermischung zwischen aufeinanderfolgenden Abstromteilen sind hier nicht angesprochen und dementsprechend auch nicht gelöst.

Aufgabe der vorliegenden Erfindung war es daher, die Nachteile des Standes der Technik zu vermeiden und insbesondere eine Verfahrensweise zu entwickeln, die in einer einzigen Begasungsvorrichtung auch bei einer rein physikalischen Absorption Absorptionsgrade ermöglicht, die mehr als einer einzigen theoretischen Absorptionsstufe entsprechen. Eine weitere Aufgabe bestand in der Bereitstellung einer entsprechenden Begasungsvorrichtung.

Zur Lösung dieser Aufgaben wird eine kombinierte Gleich- und Gegenstromführung von Gas- und Flüssigphase bzw. eine Begasungsvorrichtung in kaskadierter Bauweise vorgeschlagen.

Die Erfindung betrifft daher ein Verfahren zur mehrstufigen Begasung von in einer Begasungsvorrichtung abströmenden Flüssigkeiten, dadurch gekennzeichnet, daß eine aus mindestens zwei übereinander angeordneten Abstromteilen bestehende Begasungsvorrichtung benutzt wird, wobei die Gaszufuhr am oberen Ende jedes Abstromteils und die Frischgaszufuhr nur am oberen Ende des untersten Abstromteils erfolgt, eine Abscheidung der Gasblasen am unteren Ende jedes Abstromteils durch entsprechende Erniedrigung der Geschwindigkeit des Flüssigkeitsstroms zwischen den jeweils benachbarten Abstromteilen und am unteren Ende des untersten Abstromteils durchgeführt wird, die abgeschiedenen Gasblasen nach außen abgeführt und zur Ermöglichung eines Gegenstroms in den jeweils nächsthöheren Abstromteil wieder eingebracht werden und wobei die Geschwindigkeit des Flüssigkeitsstroms unmittelbar nach der Gasblasenabscheidung vor der Eindosierung weiterer Gases so stark erhöht wird, daß eine Blasenrückvermischung zwischen den jeweils unmittelbar folgenden Abstromteilen vermieden wird.

Weiterhin bezieht sich die Erfindung auf eine Vorrichtung zur mehrstufigen Begasung von abströmenden Flüssigkeiten, bestehend aus einem zylindrischen, zumindestens am oberen Ende geschlossenen Körper und Einlaß- sowie Auslaßvorrichtungen für die Flüssigkeit und das Gas, dadurch gekennzeichnet, daß der zylindrische Körper aus mindestens zwei übereinander angeordneten Abstromteilen besteht, wobei sich am oberen Ende jedes Abstromteils eine Begasungsvorrichtung befindet, zwischen jeweils zwei benachbarten Abstromteilen und am unteren Ende des untersten Abstromteils eine Erweiterung zur Verminderung der Abstromgeschwindigkeit zwecks Gasblasenabscheidung vorhanden ist, daß jede Erweiterung einen Gasauslaß aufweist, wobei zur Ermöglichung eines Gegenstroms der Gasauslaß der von oben zweiten und jeder weiteren Erweiterung mit dem Gaseinlaß des jeweils nächsthöheren Abstromteils über eine Rohrleitung verbunden ist und daß der von oben zweite und jeder weitere Abstromteil unmittelbar nach der vorangehenden Erweiterung und vor dem Gaseinlaß eine Verengung aufweist.

Nach dem erfindungsgemäßen Verfahren erfolgt also die Begasung der vertikal abwärtsströmenden Flüssigkeit am oberen Ende jedes Abstromteils (Kaskadenstufe) — wobei aber Frischgas nur am oberen Ende des untersten Abstromteils der Begasungskaskade zugeführt wird — über einen Gaseinlaß und mittels hierfür geeigneter Gasverteiler. Als solche seien beispielsweise Lochplatten, die vorzugsweise radial zum Umfang des jeweiligen Abstromteils angeordnet sind, Sinterplatten oder Zweistoffdüsen genannt. Der Lochdurchmesser dieser Gasverteiler, der von Einfluß auf den mittleren Blasendurchmesser des abwärts geförderten Gases ist, liegt in der Regel unterhalb von 2 mm, vorzugsweise zwischen 0,1 mm und 1 mm. Daneben spielen für den mittleren Blasendurchmesser die Strömungsgeschwindigkeit der Flüssigkeit (sog. Leerrohrgeschwindigkeit) sowie die Oberflächenspannung und die Viskosität der Flüssigkeit eine Rolle. Um möglichst geringe Absorberlängen zu ermöglichen, sollte der mittlere Blasendurchmesser im allgemeinen 10 mm nicht überschreiten. Vorzugsweise liegt er zwischen 0,2 mm und 6 mm. Dabei ist zu berücksichtigen, daß größere Blasen eine größere Aufstiegsgeschwindigkeit besitzen als kleinere Blasen, wodurch die Regelbarkeit des Systems geringer wird.

Die Leerrohrgeschwindigkeit bestimmt die Gasverweilzeit im Absorber und wird zur Erzielung einer möglichst kurzen Absorberstrecke zweckmäßigerweise auf Werte von unterhalb 2 m/s eingestellt. Vorzugsweise liegt sie jedoch unterhalb von 1 m/s, wobei beispielsweise Werte von 0,15 bis 0,6 m/sec bei einem Durchmesserverhältnis Gasabscheider/Abstromteil von 1,5 bis 2,0 und einem Verhältnis Gasabscheiderlänge/Gasabscheiderdurchmesser von 0,5 bis 2,0 besonders günstige Ergebnisse liefern. Ähnliches gilt für Leerrohrgeschwindigkeiten von 0,6 bis 1,0 m/s bei einem Durchmesserverhältnis von 2,0 bis 3,0 und einem Verhältnis Gasabscheiderlänge/Gasabscheiderdurchmesser von 2,0 bis 5,0. Ganz besonders bevorzugt sind Leerrohrgeschwindigkeiten von 0,2 m/sec bis 0,4 m/sec. Die theoretisch möglich untere Grenze liegt dort, wo die Abströmgeschwindigkeit der Flüssigkeit und die Aufstiegsgeschwindigkeit der Blasen gleich ist und sich ein Schwebezustand der Gasblasen ausbildet. Dieser Wert liegt — in Abhängigkeit von der Blasengröße, der Zusammensetzung des Gases, der Temperatur, der Art der Flüssigkeit und des Dichteverhältnisses Gas/Flüssigkeit — für Wasser und Sauerstoff bei etwa 0,18 m/s.

Die Abscheidung der Gasblasen erfolgt nach dem erfindungsgemäßen Verfahren durch Schwerkraftabscheidung, in der Weise, daß die Geschwindigkeit des Flüssigkeitsstromes in geeigneter Weise entsprechend erniedrigt wird. Die Schwerkraftabscheidung kann dabei durch Einbau von Blenden oder Prallblechen gefördert werden, welche die Bildung von Großblasen begünstigen.

Weiterhin ist auch eine Abtrennung der Gasblasen durch Kombination dieser Schwerkraftabscheidung mit Fliehkraftabscheidung möglich. Allerdings ist mit der Fliehkraftabscheidung im allgemeinen ein Druckverlust verbunden, so daß erfindungsgemäß die alleinige Schwerkraftabscheidung bevorzugt ist. Hiernach erfolgt die Absenkung der Strömungsgeschwindigkeit in einer Erweiterung, die sich zwischen den jeweils benachbarten Abstromteilen und am unteren Ende des untersten Abstromteils befindet. Dabei wird der eintretende Gas-/Flüssigkeitsstrahl durch Impulsaustausch bis zur Gasabscheidung abgebremst. Aufgrund der Verhältnisse in einem turbulenten Freistrahl war dabei zu erwarten gewesen, daß zumindest die sich im Kern des Strahles befindlichen Gasblasen in erheblichem Maße — unter den Bedingungen des Beispiels 1 bis zu 2 m und mehr — mitgerissen werden. Überraschenderweise zeigt sich jedoch, daß schon nach sehr kurzen Strecken — unter den Bedingungen des Beispiels 1 nach etwa 0,12 m — eine vollständige Abscheidung der Gasblasen zu erzielen ist. Außerdem ist es als überraschend anzusehen, daß die Gasblasen nicht oder nur in unbedeutendem Umfang in den darüber befindlichen Abstromteil zurücksteigen, sondern daß durch eine, in Querrichtung des Gasabscheiders wirkende Komponente im wesentlichen nur ein Aufsteigen der Gasblasen in dessen Randbereichen erfolgt. Dadurch lassen sich die abgeschiedenen Gasblasen ohne Störung der abströmenden Flüssigkeit, z. B. in einem seitlichen Ringspalt, abtrennen und zur Erzielung des erfindungsgemäß mitbenutzten Gegenstromeffektes dem Gaseinlaß des nächsthöheren Abstromteils zuführen. In hohem Maße überraschend ist auch dabei, daß mit steigendem Gasgehalt die Abscheidung des Gases besser verläuft, obwohl aufgrund der damit gleichzeitig steigenden Flüssigkeitsgeschwindigkeit durch die Verringerung des freien Rohrvolumens ein stärkeres Abwärtsreißen der Gasblasen zu erwarten gewesen wäre.

Es zeigt sich in diesem Zusammenhang weiter, daß schon bei einer formalen Leerrohrgeschwindigkeit (= Leerrohrgeschwindigkeit bezogen auf den freien Querschnitt des Gasabscheiders) von 0,19 m/sec eine vollständige Gasabscheidung erzielt werden kann, wenn die Leerrohrgeschwindigkeit im vorgeschalteten Abstromteil beispielsweise 0,47 m/sec beträgt. Dies ist insofern auch unerwartet, als eine Leerrohrgeschwindigkeit im Abstromteil von 0,19 m/sec einen Abstrombetrieb ohne Aufsteigen der Gasblasen gewährleistet. Unter diesen Bedingungen kann die effektive Abscheiderlänge, gemessen vom unteren Teil des abgetauchten Abstromteils bis zum unteren Ende des Gasabscheiders, weniger als 0,7 m betragen.

Bei der Verfahrensweise, bei der in dem dem Gasabscheider folgenden Abstromteil die Leerrohrgeschwindigkeit wieder auf den Wert vor dem Gasabscheider ansteigt, hat sich gezeigt, daß ein nicht unerheblicher Teil der Gasblasen, die von der Begasung in diesem Abstromteil stammen, in den darüber liegenden Gasabscheider zurücksteigt und hier mit dem, an der Begasungsstelle des darüber angeordneten Abstromteils eingegebenen Gas abgeschieden wird. Die Menge ist dabei um so größer, je geringer der Flüssigkeitsdurchsatz ist. Diese Blasenrückvermischung bedingt u. a. eine Verminderung des Absorptionsgrades aufgrund der kurzen Blasen-Verweilzeit und der Verschlechterung des Gegenstromeffekts.

Diese Schwierigkeit, die sich insbesondere bei geringen Leerrohrgeschwindigkeiten zeigt, läßt sich in überraschend einfacher Weise nun dadurch vermeiden, daß die Leerrohrgeschwindigkeit unmittelbar nach dem Gasabscheider und vor der Begasungsstelle zunächst auf einen Wert angehoben wird, der deutlich über der Leerrohrgeschwindigkeit im übrigen Abstromteil liegt. Im allgemeinen beträgt diese Steigerung 60% bis 300%, vorzugsweise 80% bis 170%. Sie hängt von der Art der Flüssigkeit, der Dichtedifferenz Gas/Flüssigkeit, der Gasmenge, dem mittleren Blasendurchmesser und dem absoluten Wert der Leerrohrgeschwindigkeit ab. So ist die erforderliche Steigerungsrate um so größer, je kleiner die Dichtedifferenz Gas/Flüssigkeit und die Leerrohrgeschwindigkeit und je größer der mittlere Blasendurchmesser (bzw. der Anteil und Durchmesser der Großblasen) ist. Falls die obigen Werte der prozentualen Steigerung überschritten werden, kann es zu einer nachteiligen Sogwirkung auf die Gasblasen im darüber befindlichen Gasabscheider kommen. Außerdem steigt der für den Durchfluß durch die Begasungsvorrichtung erforderliche Energieaufwand. Ein zu großer Anstieg des Druckverlustes in dem Abstromreaktor ist auch deshalb von Nachteil, weil dadurch ein Gastransport im Gegenstrom ohne Zwischenkompression erschwert wird. Diese Gasförderung kann nämlich in dem erfindungsgemäßen System normalerweise ohne eine derartige Zwischenkompression erfolgen, da der hydrostatische Druck vom Reaktorkopf zum Reaktorfuß zunimmt.

Die mittlere Verweilzeit des ozonhaltigen Gases je Abstromteil beträgt im allgemeinen etwa 0,2 s bis 60 s, vorzugsweise 0,5 s bis 10 s pro m Abstromteil-Länge. Das Volumenverhältnis von Flüssigkeit zu Gas liegt in der Regel bei größer als 4 : 1, vorzugsweise größer als 7 : 1. Allgemein steigt dabei der Absorptionsgrad mit steigendem Volumenverhältnis von Flüssigkeit zu Gas an. Grundsätzlich sind auch kleinere Verhältnisse als 4 : 1 möglich, jedoch wächst dann die Gefahr der Bildung von Großblasen und des damit verbundenen Entstehens eines Gaspolsters am Kopf der Begasungsvorrichtung. Durch diese Gaspolsterbildung kann die Begasungsvorrichtung leergedrückt werden.

Das erfindungsgemäße Verfahren kann bei Normaldruck durchgeführt werden. Zur Erhöhung des Absorptionsgrades ist es jedoch vorteilhaft, unter erhöhtem Druck, beispielsweise bei bis zu 60 bar, vorzugsweise bei 1 bar bis 16 bar, zu arbeiten.

Bei der erfindungsgemäß durchgeführten Verfahrensweise der Kombination von Gleichstrom- und Gegenstromprinzip wird Frischgas nur dem Gaseinlaß des untersten Abstromteils zugeführt und verläßt dann schließlich, nach Durchlauf der verschiedenen Stufen, die Begasungsvorrichtung am Gasauslaß des obersten Gasabscheiders. Demgegenüber tritt die Flüssigkeit am oberen Ende des ersten Abstromteils ein und verläßt die Vorrichtung am Flüssigkeitsauslaß des untersten Gasabscheiders.

Die erfindungsgemäße Vorrichtung besteht — wie erwähnt — aus mindestens zwei Abstromteilen (Kaskadenstufen), die vorzugsweise gleiche Länge und gleichen Durchmesser besitzen. Die Abmessungen sind grundsätzlich nicht kritisch und richten sich nach dem gewünschten Absorptionsgrad und der Zahl der integrierten Abstromteile. Im allgemeinen wird man dabei Abstromteile bevorzugen, bei denen das Verhältnis von Höhe zu Nennweite größer als 1, vorzugsweise größer als 3, ist.

Für die Länge eines Abstromteils haben sich 0,2 m bis 3 m als zweckmäßig erwiesen. Die vorzugsweisen Werte liegen bei 0,3 bis 1 m. Die betreffenden Nennweiten ergeben sich dann jeweils automatisch aus den gewünschten Flüssigkeits- und Gasdurchsatzmengen.

Jedes Abstromteil verfügt am oberen Teil über einen Gaseinlaß und die eingangs bereits näher geschilderten Gasverteiler. Der Gaseinlaß liegt dabei vorzugsweise 0% bis 30%, bezogen auf die gesamte Abstromteil-Länge, unterhalb des jeweils oberen Ende des Abstromteils und im zweiten und jedem folgenden Abstromteil unmittelbar hinter der erfindungsgemäßen Rohrverengung.

Vorzugsweise läuft der Oberteil des obersten Abstromteils spitz (kegelförmig) zu, weil sich dadurch in überraschend einfacher Weise das Entstehen eines Gaspolsters vermeiden läßt. Die Neigung dieser Spitze (dieses Kegels) ist dabei nicht kritisch; im allgemeinen beträgt der Winkel zwischen den die Spitze (den Kegel) bildenden Wandungen 3 bis 15°, vorzugsweise 5 bis 10°. Die Einlaßöffnung für die Flüssigphase liegt vorzugsweise am obersten Teil dieser Spitze (dieses Kegels).

Die sich jedem Abstromteil anschließende Erweiterung (Gasabscheider) besteht aus einem Behälter, dessen Durchmesser größer als derjenige dieses bzw. des sich daran anschließenden Abstromteils ist. Die Größe dieses Durchmessers ist dabei so zu wählen, daß durch diese Querschnittserweiterung die Flüssigkeitsgeschwindigkeit in diesem Bereich so weit erniedrigt wird, daß sie von der Aufstiegsgeschwindigkeit der Gasblasen übertroffen wird. Dadurch kommt es zu einer Trennung von Gas- und Flüssigphase. Der exakte Wert dieses Durchmessers ist dabei leicht durch einige routinemäßige Messungen zu bestimmen. Das Verhältnis von Durchmesser des Gasabscheiders zum Abstromteil beträgt dabei zweckmäßigerweise 1,4 : 1 bis 3 : 1, vorzugsweise 1,6 : 1 bis 2,5 : 1, und das Verhältnis Nennweite zu Höhe des Gasabscheiders zweckmäßigerweise 0,5 : 1 bis 5 : 1, vorzugsweise 0,5 : 1 bis 2 : 1.

Durch den in diesen Gasabscheider vorzugsweise hineinragenden oberen Abstromteil entsteht eine Art Kammer, an deren oberen Ende sich die Gasauslaßöffnung befindet. Die Eintauchtiefe des jeweiligen Abstromteils liegt zumeist bei 10% bis 80%, vorzugsweise 20% bis 40%, bezogen auf die Höhe des Gasabscheiders.

Das dem Gasabscheider folgende Abstromteil besitzt — wie erwähnt — zur Unterbindung einer Gasblasenrückvermischung eine Querschnittsverengung oberhalb des Gaseinlasses in der Weise, daß die Steigerung der Leerrohrgeschwindigkeit zumeist 60% bis 300%, vorzugsweise 80% bis 170%, beträgt. Die Länge dieser Verengung liegt im allgemeinen bei 20% bis 60%, vorzugsweise bei 20% bis 40%, bezogen auf die Länge des jeweiligen Abstromteils. Größere Querschnittsverengungen können zu der oben geschilderten Sogwirkung führen; außerdem wächst naturgemäß mit steigender Verengung der Druckverlust und der Energieverbrauch. Die Verengung ist vorzugsweise als Venturidüse ausgebildet, wenngleich sie auch über Lochscheiben, Blenden, Mündungen, Düsen, Sinterplatten sowie Drahtgewebe erfolgen kann. In diesem Fall besteht jedoch die Gefahr des Abreißens der Flüssigkeitsströmung und der Bildung eines Gaspolsters.

Der letzte Gasabscheider besitzt neben einem Gasauslaß gleichzeitig auch die Auslaßöffnung für die die Begasungsvorrichtung durchströmende Flüssigkeit.

Als Material für die erfindungsgemäße Vorrichtung kommen alle hierfür üblichen Werkstoffe, wie Stahl, Edelstahl oder Glas in Frage, wobei sich letztere insbesondere auch für aggressive Flüssigkeiten bzw. aggressive Gase eignen.

Im Bedarfsfalle kann es auch zweckmäßig sein, mehrere der erfindungsgemäßen Begasungsvorrichtungen hintereinanderzuschalten.

Das erfindungsgemäße Verfahren bzw. die erfindungsgemäße Vorrichtung eignen sich für die Absorption der verschiedensten Gase in den verschiedensten Flüssigkeiten, ggf. mit nachgeschalteter Reaktion des absorbierten Gases mit etwaigen Bestandteilen oder Verunreinigungen der Flüssigkeit. Beispielsweise seien die Absorption von nitrosen Gasen zwecks Bildung von Salpetersäure, von Phosgen zwecks Hydrolyse oder die Begasung einer Sulfitlösung mit Luft zum Zwecke der Oxydation erwähnt. Weiterhin sei hier auch die Begasung von Wasser mit ozonhaltigen Gasen im Rahmen der Trinkwasseraufbereitung oder der Abwasserreinigung angeführt. Besonders vorteilhaft ist dabei eine Verfahrensweise, wie sie in der DE-OS 2 556 328 beschrieben ist, wo nur ein Teilstrom des zu behandelnden Wassers unter erhöhtem Druck mit Ozon beladen wird, der dem Hauptwasserstrom bei Normaldruck dann wieder zugemischt wird. Die in dieser DE-OS für diesen Zweck beschriebene Füllkörperkolonne wäre also durch den erfindungsgemäßen Abstrom-Kaskadenabsorber zu ersetzen und dementsprechend wäre das ozonhaltige Gas am unteren Absorberkopf einzuspeisen und im Gegenstrom zur Flüssigkeit nach oben zu führen.

Schließlich kann die erfindungsgemäße Vorrichtung auch als Desorber zur Entfernung von in einer Flüssigkeit gelöstem Gas eingesetzt werden.

Die erfindungsgemäße Vorrichtung zeichnet sich durch ihre kompakte Bauweise und ihren geringen Raumbedarf aus und ermöglicht aufgrund ihrer hohen Stufenzahl hohe Absorptionsgrade bei hohen Durchsatzmengen. Sie gestattet ferner die Anwendung des Gegenstromprinzips in einer einzigen Abstromreaktoreinheit.

Die anliegende Figur veranschaulicht in beispielhafter Weise das erfindungsgemäße Verfahren und die erfindungsgemäße Vorrichtung. Der darin wiedergegebene Abstrom-Kaskadenabsorber besteht aus drei Abstromteilen (1), (1') und (1'') und den dazugehörigen Gasabscheidern (Erweiterungen) (2), (2') und (2''). Der Kopf des obersten Abstromteils (1) läuft dabei spitz zu. (3) ist der Flüssigkeitseintritt und (4) der Austritt der Flüssigphase. Über (5) erfolgt die Frischgaszufuhr, während über (6) das Gas aus dem Abstromabsorber abgeführt wird. Über die jeweiligen Leitungen (7) bzw. (8) wird das Gas aus dem Gasabscheider (2') bzw. (2'') zur Ermöglichung des Gegenstromeffekts dem Gaseinlaß des jeweils nächsthöheren Abstromteils zugeführt. (9) und (9') stellen die venturiartige Rohrverengung dar.

Beispiel 1

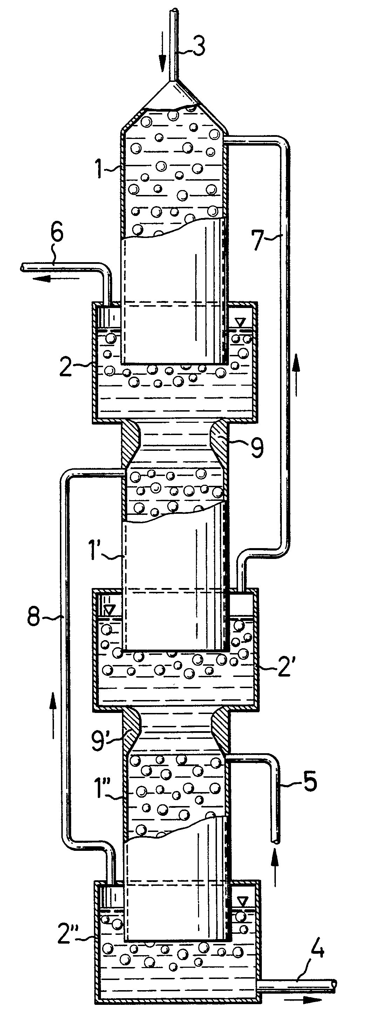

Die benutzte Begasungsvorrichtung entsprach der gemäß der Figur und bestand aus zwei rohrförmigen Abstromteilen aus Glas mit einer Länge von jeweils 1 m und einem Durchmesser von 0,15 m. Der Winkel der Kegelspitze des oberen Abstromteils lag bei 10°. Die beiden dazugehörigen Gasabscheider, gleichfalls aus Glas, hatten je eine Länge von 0,5 m und einen Durchmesser von 0,25 m. Die Länge der gesamten Vorrichtung betrug 2,3 m und die Eintauchtiefe jedes Abstromteils in den dazugehörigen Gasabscheider 0,3 m. Am oberen Ende des unteren Abstromteils (also zwischen dem oberen Gasabscheider und dem zweiten Gaseinlaß) befand sich eine venturiartige Rohrverengung, die an der engsten Stelle einen Durchmesser von 0,10 m besaß und sich in Längsrichtung jeweils auf 0,24 m erstreckte. Als Gasverteiler dienten je vier radial angeordnete Lochplatten, wobei die Zahl der Löcher pro Platte 128 und der Lochdurchmesser 0,5 mm betrug. Der Abstand des Gaseinlasses (der Lochplatten) vom Kopf des jeweiligen Abstromteils lag bei etwa 0,3 m.

Als zu begasende Flüssigkeit diente Wasser, das am Kopf des ersten Abstromteils zugeführt wurde und eine Temperatur von 15°C besaß. Als Gas wurde ozonhaltiger Sauerstoff eingesetzt, dessen Ozongehalt 2,8 Vol.-% betrug. Die Absorbervorrichtung wurde bei einem Druck von 1,1 bar (absolut) betrieben. Bei einer Leerrohrgeschwindigkeit von 0,24 m/s stellte sich alsbald stationär ein mittlerer Blasendurchmesser von etwa 5 mm ein.

Der Flüssigkeitsdurchsatz lag bei 15 m³/h und der Gasdurchsatz bei 432 Nl/h.

Nach der ersten Stufe ergab sich ein Ozonabsorptionsgrad von 94,9% und nach der zweiten Stufe von 99,8%. Der Absorptionsgrad $\varphi$ ist dabei definiert als:

$$O_3 = \frac{\overset{\circ}{n}_{O_3} - N_{O_3}^{Ax}}{\overset{\circ}{n}_{O_3}}$$

mit $\overset{o}{n}_{O_3}$ =    Molzahl $O_3$ im Eintrittsgas vor der ersten Absorptionsstufe

$n_{O_3}^{A_x}$ =    Molzahl $O_3$ im Austrittsgas nach der jeweiligen Stufe.

Zur Bestimmung der Mengenstrombilanz in diesem Beispiel wurden die an jedem Gasauslaßstutzen austretenden Gasmengen mit einer Gasuhr gemessen. Die jeweils mit dem eingesetzten Gasstrom unter Berücksichtigung der in der Flüssigkeit absorbierten Gasmenge übereinstimmende Gasaustrittsmenge war ein deutlicher Hinweis auf die quantitativ erfolgende Gasabscheidung nach jeder Stufe.

Dagegen ergab eine Gasmengen-Bilanzierung ohne eingebaute Venturiverengung, daß dadurch zwar der Gasabscheider in seiner guten Wirksamkeit nicht beeinträchtigt wurde, daß aber ca. 70% des unterhalb vom Gasabscheider eingegebenen Gases direkt in den Gasabscheider hochstieg und nicht wie gewünscht im Abstromteil abwärts geführt wurde.

### Beispiel 2

Um zu zeigen, daß sich die Gasabscheidung mit steigendem Gasgehalt noch weiter verbessern läßt, wurden folgende Versuche durchgeführt. Die Apparatur gemäß Beispiel 1 (engster Durchmesser der Venturidüse im vorliegenden Fall allerdings 0,095 m) wurde mit einer konstanten Leerrohrgeschwindigkeit von 0,35 m/sec betrieben und der Gasdurchsatz (und damit der Gasgehalt) variiert. Der Grad der Gasabscheidung wurde am oberen Abstromteil über je eine Gasuhr am Gaseinlaß und am Gasauslaß bestimmt. Bei einem von 86 l/h auf 345 l/h und schließlich auf 530 l/h erhöhten Gasdurchsatz nahm der Abscheidungsgrad von 92% über 97% auf 99% zu.

### Patentansprüche

1. Verfahren zur mehrstufigen Begasung von in einer Begasungsvorrichtung abströmenden Flüssigkeiten, dadurch gekennzeichnet, daß eine aus mindestens zwei übereinander angeordneten Abstromteilen bestehende Begasungsvorrichtung benutzt wird, wobei die Gaszufuhr am oberen Ende jedes Abstromteils und die Frischgaszufuhr nur am oberen Ende des untersten Abstromteils erfolgt, eine Abscheidung der Gasblasen am unteren Ende jedes Abstromteils durch entsprechende Erniedrigung der Geschwindigkeit des Flüssigkeitsstroms zwischen den jeweils benachbarten Abstromteilen und am unteren Ende des untersten Abstromteils durchgeführt wird, die abgeschiedenen Gasblasen nach außen abgeführt und zur Ermöglichung eines Gegenstroms in den jeweils nächsthöheren Abstromteil wieder eingebracht werden und wobei die Geschwindigkeit des Flüssigkeitsstroms unmittelbar nach der Gasblasenabscheidung vor der Eindosierung weiteren Gases so stark erhöht wird, daß eine Blasenrückvermischung zwischen den jeweils unmittelbar folgenden Abstromteilen vermieden wird.

2. Verfahren nach Anspruch 1, dadurch gekennzeichnet, daß die Leerrohrgeschwindigkeit unterhalb von 1 m/s liegt.

3. Verfahren nach Anspruch 1 und 2, dadurch gekennzeichnet, daß nur über den Gaseinlaß des untersten Abstromteils Frischgas eingebracht wird.

4. Vorrichtung zur mehrstufigen Begasung von abströmenden Flüssigkeiten, bestehend aus einem zylindrischen, zumindestens am oberen Ende geschlossenen Körper und Einlaß- sowie Auslaßvorrichtungen für die Flüssigkeit und das Gas, dadurch gekennzeichnet, daß der zylindrische Körper aus mindestens zwei übereinander angeordneten Abstromteilen (1, 1', 1'') besteht, wobei sich am oberen Ende jedes Abstromteils eine Begasungsvorrichtung befindet, zwischen jeweils zwei benachbarten Abstromteilen und am unteren Ende des untersten Abstromteils eine Erweiterung (2, 2', 2'') zur Verminderung der Abstromgeschwindigkeit zwecks Gasblasenabscheidung vorhanden ist, daß jede Erweiterung einen Gasauslaß aufweist, wobei zur Ermöglichung eines Gegenstroms der Gasauslaß der von oben zweiten und jeder weiteren Erweiterung mit dem Gaseinlaß des jeweils nächsthöheren Abstromteils über eine Rohrleitung (7, 8) verbunden ist und daß der von oben zweite und jeder weitere Abstromteil unmittelbar nach der vorangehenden Erweiterung und vor dem Gaseinlaß eine Verengung aufweist.

5. Vorrichtung nach Anspruch 4, dadurch gekennzeichnet, daß die Verengung in Form einer Venturidüse (9, 9') ausgebildet ist.

### Claims

1. A process for multistep gassing of liquids streaming downward in a gassing apparatus, which comprises using a gassing apparatus consisting of at least two superposed downstream parts, wherein the gas is fed in at the upper end of each downstream part and fresh gas is fed in exclusively at the upper end of the lowest downstream part, gas bubbles are separated at the lower end of each downstream part by reducing the velocity of the liquid flow in adequate manner between two adjacent downstream parts and at the lower end of the lowest downstream part, the separated gas bubbles are discharged to the outside and recycled to the next downstream part above in order to allow countercurrent flow and wherein the speed of the liquid stream immediately after gas bubble separation before feeding in further gas is raised in such a manner that backmixture of bubbles between the immediately subsequent downstream parts each is prevented.

2. The process as claimed in claim 1, wherein the superficial velocity is below 1 m/sec.

3. The process as claimed in claims 1 and 2, wherein fresh gas is fed in via the gas inlet of the lowest downstream part only.

4. An apparatus for multistep gassing of liquids streaming downward, consisting of a cylindrical vessel closed at least at the top, and inlet and outlet openings for the liquid and the gas, characterized that the cylindrical vessel consists of at least two superposed downstream parts (1, 1', 1''), each downstream part having a gassing device at its upper end, an enlargement (2, 2', 2'') for reducing the downstream speed in order to separate gas bubbles is arranged between two adjacent downstream parts each and at the lower end of the lowest downstream part, each enlargement being provided with a gas outlet, and, in order to allow countercurrent flow, the gas outlet of the enlargement beginning with the second from above and each further is connected via a tubular duct (7, 8) with the gas inlet of the corresponding next downstream part above and wherein the downstream part beginning with the second from above and each further has a contraction immediately after the preceding enlargement and before the gas inlet.

5. The apparatus as claimed in claim 4, wherein the contraction is designed in the form of a Venturi nozzle (9, 9').

## Revendications

1. Procédé d'introduction de gaz en plusieurs stades dans des liquides qui s'écoulent dans un appareil d'introduction de gaz, caractérisé en ce qu'on utilise un appareil d'introduction de gaz formé d'au moins deux parties d'écoulement disposées l'une au-dessus de l'autre, l'amenée de gaz s'effectuant à l'extrémité supérieure de chaque partie d'écoulement et l'amenée de gaz frais seulement à l'extrémité supérieure de la partie d'écoulement la plus basse, une séparation des bulles de gaz étant effectuée à l'extrémité inférieure de chaque partie d'écoulement par diminution appropriée de la vitesse du courant de liquide entre les parties d'écoulement chaque fois voisines et à l'extrémité inférieure de la partie d'écoulement la plus basse, les bulles de gaz séparées étant évacuées vers l'extérieur et étant à nouveau introduites dans la partie d'écoulement chaque fois située immédiatement au-dessus, pour permettre un contre-courant, et la vitesse du courant de liquide, immédiatement après la séparation de bulles de gaz et avant l'introduction dosée de gaz supplémentaire, étant accrue assez fortement pour que l'on évite un mélange rétrograde des bulles entre les parties d'écoulement qui se suivent chaque fois immédiatement.

2. Procédé selon la revendication 1, caractérisé en ce que la vitesse dans le tube vide est inférieure à 1 m/s.

3. Procédé selon les revendications 1 et 2, caractérisé en ce que l'on introduit du gaz frais uniquement par l'entrée de gaz de la partie d'écoulement la plus basse.

4. Appareil pour l'introduction de gaz en plusieurs stades dans des liquides en écoulement, formé d'un corps cylindrique fermé au moins à l'extrémité supérieure et de dispositifs d'entrée et de sortie du liquide et du gaz, caractérisé en ce que le corps cylindrique est formé d'au moins deux parties d'écoulement (1, 1', 1'') disposées l'une au-dessus de l'autre, un dispositif d'introduction de gaz se trouvant à l'extrémité supérieure de chaque partie d'écoulement, un élargissement (2, 2', 2'') étant prévu, pour diminuer la vitesse d'écoulement en vue de la séparation de bulles de gaz, entre les parties d'écoulement chaque fois voisines et à l'extrémité inférieure de la partie d'écoulement la plus basse, en ce que chaque élargissement présente une sortie de gaz, la sortie de gaz du deuxième élargissement en partant du haut et de chaque élargissement suivant étant reliée par un tuyau (7, 8) à l'entrée de gaz de la partie d'écoulement chaque fois située immédiatement au-dessus pour permettre un contre-courant, et en ce que la deuxième partie d'écoulement en partant du haut et chaque partie d'écoulement suivante présentent un rétrécissement immédiatement après l'élargissement précédent et avant l'entrée de gaz.

5. Appareil selon la revendication 4, caractérisé en ce que le rétrécissement est conçu sous la forme d'une buse de Venturi (9, 9').